# EUROPÄISCHE PATENTSCHRIFT

(11) **EP 3 665 438 B1**
(45) Veröffentlichungstag und Bekanntmachung des Hinweises auf die Patenterteilung: **23.06.2021**
(21) Anmeldenummer: 18740204.5
(22) Anmeldetag: 12.07.2018
(51) Int. Cl.: G01C 19/5783, G01C 19/5733, B81B 3/00

(54) **DREHRATENSENSOR, VERFAHREN ZUR HERSTELLUNG EINES DREHRATENSENSORS**
YAW-RATE SENSOR, METHOD FOR PRODUCING A YAW RATE SENSOR
CAPTEUR DE VITESSE DE ROTATION, PROCÉDÉ DE FABRICATION D'UN CAPTEUR DE VITESSE DE ROTATION

(30) Priorität: 07.08.2017 DE 102017213640
(43) Veröffentlichungstag der Anmeldung: 17.06.2020
(73) Patentinhaber: Robert Bosch GmbH, 70442 Stuttgart (DE)
(72) Erfinder: RAMSPERGER, Robert, 71126 Gaeufelden (DE); CARDANOBILE, Stefano, 72770 Reutlingen (DE); PUTNIK, Martin, 72762 Reutlingen (DE)
(86) Internationale Anmeldenummer: PCT/EP2018/068940
(87) Internationale Veröffentlichungsnummer: WO 2019/029944

(56) Entgegenhaltungen:
- DE-A1-102013 208 699
- DE-A1-102015 213 447

## Beschreibung

### Stand der Technik

Die Erfindung geht aus von einem Drehratensensor nach dem Oberbegriff des Anspruchs 1.

Drehratensensoren auf Substraten sind allgemein bekannt. Bei solchen Drehratensensoren handelt es sich um spezielle mikroelektromechanische Systeme (MEMS), mit welchen Drehraten gemessen werden können. Derartige Sensoren kommen in vielfältigen Anwendungen zum Einsatz. Typischerweise weisen Drehratensensoren dabei eine oder mehrere Antriebsstrukturen auf. Die Antriebsstrukturen können typischerweise über Elektroden, beispielsweise mittels Kammelektroden, angetrieben werden. Dafür, verbinden Federstrukturen/Federanordnungen die Antriebsstrukturen (bzw. Antriebsrahmen) des Drehratensensors federnd mit dem Substrat. Hierbei kommen teilweise Federstrukturen, welche aus gefalteten Balken aufgebaut sind, zum Einsatz. Solche Federstrukturen haben bei gleicher Steifigkeit tendenziell einen geringeren Zugstress als einfache Balken. Derartige Federstrukturen werden U-Federn genannt. Eine spezielle Ausführung von Federanordnungen sind zwei verbundene U-Federn, welche durch einen breiten Federkopf (Flying-Bar) verbunden sind. Derartige Federanordnungen werden auch als "Double-Folded Beam Suspension" (DFBS) bezeichnet.

Nachteilig bei solchen bekannten Federanordnungen, insbesondere auch bei bekannten DFBS, ist jedoch, dass sie teils große Abweichung von einer gewünschten linearen Rückstellkraft aufweisen, was sich störend auf das Verhalten der Drehratensensoren auswirkt.

Die DE 10 2015 213447 A1 zeigt einen Drehratensensor mit einem Substrat mit einer Haupterstreckungsebene und mit mindestens einer gegenüber dem Substrat beweglichen ersten Struktur und mit mindestens einer gegenüber dem Substrat und gegenüber der ersten Struktur beweglichen zweiten Struktur. Der Drehratensensor umfasst eine erste Antriebsstruktur zur Auslenkung der ersten Struktur aus einer Ruhelage der ersten Struktur mit einer Bewegungskomponente im Wesentlichen parallel zu einer ersten Achse. Der Drehratensensor umfasst ferner eine zweite Antriebsstruktur zur Auslenkung der zweiten Struktur aus einer Ruhelage der zweiten Struktur mit einer Bewegungskomponente im Wesentlichen parallel zu der ersten Achse. Die DE 10 2013 208699 A1 offenbart eine Feder für eine mikromechanische Sensorvorrichtung, aufweisend zwei Federschenkel, die in einem spitzen Winkel zueinander angeordnet sind, und einen Verbindungsbereich. Die beiden Federschenkel sind durch den Verbindungsbereich miteinander verbunden.

### Offenbarung der Erfindung

Es ist eine Aufgabe der vorliegenden Erfindung, einen Drehratensensor mit einer Antriebsstruktur, welche mithilfe einer Federanordnung an einem Substrat befestigt ist, vorzuschlagen, welcher im Vergleich zu aus dem Stand der Technik bekannten Drehratensensoren ein verbessertes Sensorverhalten aufweist.

Der erfindungsgemäße Drehratensensor gemäß dem Hauptanspruch hat gegenüber aus dem Stand der Technik bekannten Sensoren den Vorteil, dass durch die Anordnung einer Gruppe von Verbindungsbalken zwischen dem ersten und zweiten Randbalken erfindungsgemäß eine hohe Stabilität der Federanordnung bei reduzierter Masse ermöglicht wird. Dadurch ist es möglich, dass auf die Federanordnung, während des Schwingens, nur geringe Trägheitskräfte wirken, was sich vorteilhaft auf eine Reduzierung der Nichtlinearitäten der Antriebsschwingung auswirkt. Insbesondere ist es erfindungsgemäß möglich, das Gewicht des Zwischenstücks und damit der gesamten Federanordnung zu reduzieren. Die Anordnung der Verbindungsbalken zwischen dem ersten und zweiten Randbalken des Zwischenstücks mit jeweils einem Öffnungswinkel zwischen 1° und 89° zwischen einem der Verbindungsbalken und dem ersten und/oder zweiten Randbalken wirkt sich vorteilhaft auf die Gewichtsreduzierung der Federanordnung und gleichzeitig positiv auf die mechanischen Eigenschaften aus. Hierdurch können beispielsweise eine hohe Stabilität und gleichzeitig vergleichsweise große Aussparungen innerhalb des Zwischenstücks realisiert werden. Eine Reduzierung der Nichtlinearität der Antriebsschwingung hat den weiteren Vorteil, dass die Anregbarkeit parasitärer Moden, welche lokal an der Federstruktur/Federanordnung auftreten, und die Rückkopplung von Antriebsschwingung auf diese parasitären Moden verringert werden.

Der Öffnungswinkel bezieht sich insbesondere im Sinne der vorliegenden Erfindung auf den jeweils kleineren Winkel, welcher zwischen dem ersten oder zweiten Randbalken und einem Verbindungsbalken am Treffpunkt des ersten oder zweiten Randbalkens und dem Verbindungsbalken vorliegt (in der Ebene, die durch die Haupterstreckungsachse des Randbalkens und die Haupterstreckungsachse des Verbindungsbalkens aufgespannt wird). Der Öffnungswinkel kann also maximal 90° betragen, und zwar in dem Fall, dass, der Randbalken und der Verbindungsbalken senkrecht aufeinander stehen.

Generell wird im Betrieb des Drehratensensors bei kleinen Auslenkungen der Federstruktur/Federanordnung das Zwischenstück (insbesondere der "Flying-Bar") mitgezogen und folgt der beweglichen Masse des Drehsensors in Phase. Bei größeren Auslenkungen wirken zunehmend Trägheitskräfte auf das Zwischenstück, wobei die Umkehrpunkte der Schwingung der beweglichen Masse und der Schwingung des Zwischenstücks außer Phase driften. Dadurch werden die Balken (also insbesondere die erste und zweite Federkomponente) der Federstruktur/Federanordnung stärker belastet. Dies führt zu einer dynamischen Nichtlinearität der Antriebsstruktur. Erfindungsgemäß ist es in vorteilhafter Weise möglich, besonders durch eine Verringerung der Masse des Zwischenstücks, die wirkenden Trägheitskräfte, insbesondere im dynamischen Fall, auf das Zwischenstück zu erreichen, wodurch es möglich ist, dass die Federanordnung vorteilhafterweise eine geringere dynamische Nichtlinearität aufweist.

Vorteilhafte Ausgestaltungen und Weiterbildungen der Erfindung sind den Unteransprüchen sowie der Beschreibung unter Bezugnahme auf die Zeichnungen entnehmbar.

Dadurch, dass gemäß einer Ausführungsform der vorliegenden Erfindung die Verbindungsbalken der Gruppe von Verbindungsbalken jeweils mit einem Öffnungswinkel zwischen 10° und 80°, bevorzugt zwischen 30° und 60°, besonders bevorzugt zwischen 40° und 50°, weiter besonders bevorzugt zwischen 44° und 46°, an dem ersten und/oder zweiten Randbalken angeordnet sind, ist es besonders vorteilhaft möglich, das Gewicht des Zwischenstücks (also beispielsweise des Federkopfes) zu verringern und besonders vorteilhaft die auf die Federanordnung wirkenden Trägheitskräfte während des Schwingens zu reduzieren. Gleichzeitig können besonders vorteilhafte mechanische Eigenschaften erzielt werden, beispielsweise kann eine gewünschte Stabilität erreicht werden.

Dadurch, dass gemäß einer Ausführungsform der vorliegenden Erfindung die Verbindungsbalken einer ersten Untergruppe der Gruppe von Verbindungsbalken relativ zu einer Haupterstreckungsachse des ersten Randbalkens eine positive Steigung aufweisen und wobei die Verbindungsbalken einer zweiten Untergruppe der Gruppe von Verbindungsbalken relativ zu der Haupterstreckungsachse des ersten Randbalkens eine negative Steigung aufweisen, wobei insbesondere die erste Untergruppe und die zweite Untergruppe im Wesentlichen gleich viele Verbindungsbalken aufweisen, ist es möglich, dass eine besonders vorteilhafte Gewichtsreduzierung bei gleichzeitigen vorteilhaften mechanischen Eigenschaften möglich ist.

Dadurch, dass gemäß einer Ausführungsform der vorliegenden Erfindung einer der Verbindungsbalken der ersten Untergruppe jeweils mindestens einen der Verbindungsbalken der zweiten Untergruppe kreuzt, ist es möglich, dass eine besondere mechanische Stabilität des Zwischenstücks gegenüber Krafteinflüssen aus verschiedensten Richtungen erreichbar ist.

Dadurch, dass gemäß einer Ausführungsform der vorliegenden Erfindung zwischen den Verbindungsbalken Freiräume ausgebildet sind, wobei die Freiräume insbesondere projiziert auf eine Haupterstreckungsebene des Substrats eine rautenförmige Grundfläche aufweisen, ist es möglich, dass das Gewicht des Zwischenstücks (durch diese Freiräume bzw. Aussparungen) besonders vorteilhaft reduzierbar ist. Insbesondere ist es möglich, dass die Haupterstreckungsebene des Substrats parallel zu einer durch die Haupterstreckungsachsen der Verbindungsbalken und die Haupterstreckungsachsen der Randbalken aufgespannten Ebene angeordnet ist.

Dadurch, dass gemäß einer Ausführungsform der vorliegenden Erfindung der Drehratensensor eine weitere Federanordnung, bevorzugt zwei Federanordnungen, weiter bevorzugt drei weitere Federanordnungen, aufweist, wobei die weitere Federanordnung, bevorzugt die weiteren Federanordnungen, im Wesentlichen identisch zu der Federanordnung ausgebildet ist, ist es möglich, dass der Drehratensensor mehrere erfindungsgemäße Federanordnungen aufweist, welche beispielsweise an unterschiedlichen Seiten des Drehratensensors angeordnet sind und welche besonders bevorzugt (ausgenommen von einer möglichen relativen Drehung der jeweiligen weiteren Federanordnung im Vergleich zur Federanordnung) alle im Wesentlichen gleich ausgebildet sind.

Gemäß Ausführungsformen der vorliegenden Erfindung ist es möglich, dass zusätzlich zur Gruppe der Verbindungsbalken weitere Verbindungselemente zwischen dem ersten und zweiten Randbalken angeordnet sind. Dabei kann es sich beispielsweise um weitere Verbindungsbalken handeln, welche in einem beliebigen Winkel auf den ersten und/oder zweiten Randbalken treffen, beispielsweise senkrecht. Es ist alternativ oder zusätzlich möglich, dass weitere Verbindungsbalken zwischen dem ersten und zweiten Randbalken angeordnet sind, welche sich parallel zu mindestens einem der Randbalken erstrecken. Es ist weiterhin zusätzlich oder alternativ möglich, dass weitere Verbindungselemente in Form von Flächen oder anderen geometrischen Formen zwischen dem ersten und zweiten Randbalken angeordnet sind.

Gemäß der vorliegenden Erfindung ist es möglich, dass die Gruppe von Verbindungsbalken exakt oder mehr als zwei, drei, vier, fünf, zehn, zwanzig oder eine Vielzahl von Verbindungsbalken umfasst.

Ausführungsbeispiele der vorliegenden Erfindung sind in den Zeichnungen dargestellt und in der nachfolgenden Beschreibung näher erläutert.

### Kurze Beschreibung der Zeichnungen

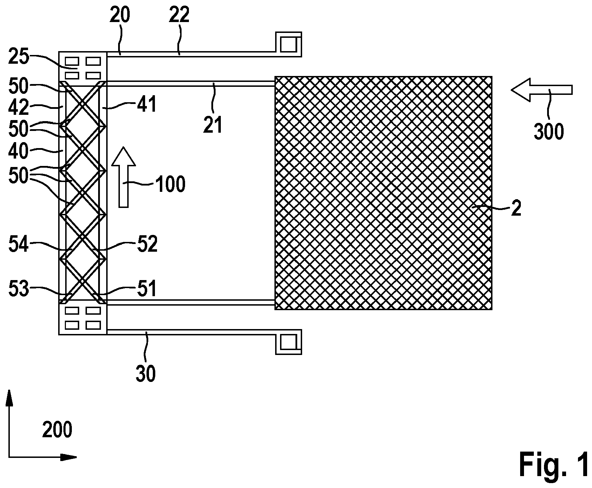

**Figur 1** zeigt schematisch eine Aufsicht auf einen Ausschnitt eines Drehratensensors gemäß einer Ausführungsform der vorliegenden Erfindung.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

**Figur 1** zeigt schematisch eine Aufsicht auf einen Ausschnitt eines Drehratensensors gemäß einer Ausführungsform der vorliegenden Erfindung. Der Drehratensensor umfasst eine Federanordnung, welche eine Antriebsstruktur 2 mit einem im Wesentlichen unterhalb der gezeigten Federanordnung angeordneten Substrat verbindet Das Substrat ist nicht explizit dargestellt Die Federanordnung umfasst eine erste Federkomponente 20, eine zweite Federkomponente 30 und ein Zwischenstück 40, welches eine mechanische Verbindung zwischen der ersten und zweiten Federkomponente 20, 30 herstellt. Die erste Federkomponente 20 umfasst einen als Balken ausgebildeten ersten Teilbereich 21 und einen als Balken ausgebildeten zweiten Teilbereich 22, wobei der erste und zweite Teilbereich 21, 22 mithilfe eines Mittelbereichs 25 verbunden sind. Die zweite Federkomponente 30 ist spiegelsymmetrisch zur ersten Federkomponente 20 ausgebildet. Die Symmetrieebene liegt dabei in der Mitte zwischen der ersten und zweiten Federkomponente 20, 30 und erstreckt sich in Richtung der Haupterstreckungsrichtung 300 des ersten Teilbereichs 21 (verdeutlicht durch den Pfeil 300) und in eine Richtung senkrecht zum Substrat (bzw. dessen Oberfläche). Das Zwischenstück 40 umfasst einen ersten Randbalken 41 und einen zweiten Randbalken 42. Der erste Randbalken 41 und der zweite Randbalken 42 sind parallel zueinander angeordnet, sodass eine erste Haupterstreckungsachse 100 des erste Randbalkens 41 in die gleiche Richtung zeigt wie eine zweite Haupterstreckungsachse des zweiten Randbalkens 42. Zwischen dem ersten und zweiten Randbalken 41, 42 ist eine Gruppe 50 von Verbindungsbalken angeordnet. Die Gruppe von Verbindungsbalken ist unterteilbar in einer erste Untergruppe von Verbindungsbalken und eine zweite Untergruppe von Verbindungsbalken. Die Verbindungsbalken 51, 52 der ersten Untergruppe von Verbindungsbalken besitzen relativ zu der Haupterstreckungsachse 100 (verdeutlicht durch den Pfeil 100) des ersten Randbalkens 41 eine positive Steigung. Die Verbindungsbalken 53, 54 der zweiten Untergruppe von Verbindungsbalken weisen relativ zu der Haupterstreckungsachse 100 des ersten Randbalkens 41 eine negative Steigung auf. Im vorliegenden Fall umfassen die erste Untergruppe und die zweite Untergruppe jeweils die gleiche Anzahl an Verbindungsbalken. Es ist jedoch auch möglich, dass sie eine unterschiedliche Anzahl an Verbindungsbalken umfassen. Alle dargestellten Verbindungsbalken 51, 52, 53, 54 der Gruppe 50 von Verbindungsbalken (also beider Untergruppen) treffen jeweils in einem Öffnungswinkel von ca. 45° auf den ersten und zweiten Randbalken 41, 42. Ein exemplarischer Öffnungswinkel 60 am Verbindungsbalken 51 ist in Figur 1 zur Verdeutlichung eingezeichnet. In der dargestellten Ausführungsform kreuzen sich jeweils einer der Verbindungsbalken 51, 52 der ersten Untergruppe und einer der Verbindungsbalken 53, 54 der zweiten Untergruppe im Zwischenraum/Zwischenbereich zwischen dem ersten und zweiten Randbalken 41, 42.

Bevorzugt gehen die sich kreuzenden Verbindungsbalken, beispielsweise die Verbindungsbalken 51, 53, in ihrem Kreuzungsbereich jeweils ineinander über, sodass Ihre Gesamtdicke im Kreuzungsbereich ca. der Dicke eines der betroffenen Verbindungsbalken 51, 53 entspricht.

Erfindungsgemäß ist es wie in Figur 1 dargestellt möglich, dass das Zwischenstück 40 spiegelsymmetrisch zu der Symmetrieebene (die in der Mitte zwischen der ersten und zweiten Federkomponente 20, 30 liegt und sich in Richtung der Haupterstreckungsrichtung 300 des ersten Teilbereichs 21 und in eine Richtung senkrecht zum Substrat bzw. dessen Oberfläche erstreckt) angeordnet ist. Es ist dadurch möglich, dass die Federanordnung (wie in Figur 1 dargestellt) insgesamt im Wesentlichen spiegelsymmetrisch zu dieser Symmetrieebene ist.

Bei der in Figur 1 dargestellten Ausführungsform (insbesondere mit einer Fachwerkstruktur) ist es beispielweise in vorteilhafter Weise möglich, die Masse des Zwischenstücks 40 der Federanordnung 10 um 30% gegenüber einer DFBS mit perforiertem Zwischenstück zu reduzieren. Simulationsergebnisse zeigen, dass dadurch die Nichtlinearität der Antriebsschwingung um 11% verringerbar ist.

## Patentansprüche

1. Drehratensensor mit einem Substrat, wobei der Drehratensensor eine in Bezug auf das Substrat bewegliche Antriebsstruktur (2) aufweist, wobei die Antriebsstruktur (2) mithilfe einer Federanordnung an dem Substrat befestigt ist, wobei die Federanordnung eine erste die Antriebsstruktur (2) und das Substrat verbindende Federkomponente (20) und eine zweite die Antriebsstruktur (2) und das Substrat verbindende Federkomponente (30) aufweist, wobei die erste Federkomponente (20) und die zweite Federkomponente (30) mithilfe eines Zwischenstücks (40) verbunden sind, **dadurch gekennzeichnet, dass** das Zwischenstück (40) einen ersten Randbalken (41) und einen zweiten Randbalken (42) aufweist, wobei zwischen dem ersten und zweiten Randbalken (41, 42) eine Gruppe (50) von Verbindungsbalken angeordnet ist, wobei die Verbindungsbalken (51, 52, 53, 54) der Gruppe (50) von Verbindungsbalken jeweils mit einem Öffnungswinkel zwischen 1° und 89° an dem ersten und/oder zweiten Randbalken (41, 42) angeordnet sind.

2. Drehratensensor nach Anspruch 1, wobei die Verbindungsbalken (51, 52, 53, 53) der Gruppe (50) von Verbindungsbalken jeweils mit einem Öffnungswinkel zwischen 10° und 80°, bevorzugt zwischen 30° und 60°, besonders bevorzugt zwischen 40° und 50°, weiter besonders bevorzugt zwischen 44° und 46°, an dem ersten und/oder zweiten Randbalken (41, 42) angeordnet sind.

3. Drehratensensor nach einem der vorherigen Ansprüche, wobei die Verbindungsbalken (51, 52) einer ersten Untergruppe der Gruppe (50) von Verbindungsbalken relativ zu einer Haupterstreckungsachse (100) des ersten Randbalkens (41) eine positive Steigung aufweisen und wobei die Verbindungsbalken (53, 54) einer zweiten Untergruppe der Gruppe (50) von Verbindungsbalken relativ zu der Haupterstreckungsachse (100) des ersten Randbalkens (41) eine negative Steigung aufweisen, wobei insbesondere die erste Untergruppe und die zweite Untergruppe im Wesentlichen gleich viele Verbindungsbalken aufweisen.

4. Drehratensensor nach Anspruch 3, wobei einer der Verbindungsbalken (51, 52) der ersten Untergruppe jeweils mindestens einen der Verbindungsbalken (53, 54) der zweiten Untergruppe kreuzt.

5. Drehratensensor nach einem der vorherigen Ansprüche, wobei zwischen den Verbindungsbalken (51, 52, 53, 54) Freiräume ausgebildet sind, wobei die Freiräume insbesondere projiziert auf eine Haupterstreckungsebene (200) des Substrats eine rautenförmige Grundfläche aufweisen.

6. Drehratensensor nach einem der vorherigen Ansprüche, wobei die Verbindungsbalken (51, 52, 53, 54) der Gruppe (50) von Verbindungsbalken den ersten und zweiten Randbalken (41, 42) miteinander mechanisch verbinden.

7. Drehratensensor nach einem der vorherigen Ansprüche, wobei der erste und zweite Randbalken (41, 42) im Wesentlichen parallel zueinander angeordnet sind.

8. Drehratensensor nach einem der vorherigen Ansprüche, wobei die Verbindungsbalken (51, 52, 53, 54) der Gruppe (50) von Verbindungsbalken im Wesentlichen als Streben zwischen dem ersten und zweiten Randbalken (41, 42) ausgebildet sind.

9. Drehratensensor nach einem der vorherigen Ansprüche, wobei die erste Federkomponente (20) einen ersten Teilbereich (21) und einen zweiten Teilbereich (22) aufweist, wobei mithilfe des ersten Teilbereichs (21) die Antriebsstruktur (2) mit dem Zwischenstück (40) verbunden ist und wobei mithilfe des zweiten Teilbereichs (22) das Zwischenstück (40) oder ein zumindest teilweise zwischen dem ersten Teilbereich (21) und dem zweiten Teilbereich (22) der ersten Federkomponente (20) angeordneter Mittelbereich (25) mit dem Substrat verbunden ist, wobei die zweite Federkomponente (30) im Wesentlichen spiegelsymmetrisch zur erste Federkomponente (20) ausgebildet ist.

10. Drehratensensor nach Anspruch 9, wobei der erste Teilbereich (21) und der zweite Teilbereich (22) jeweils im Wesentlichen als Balken ausgebildet sind, wobei der erste Teilbereich (21) und der zweite Teilbereich (22) in Ruhelage des Drehratensensors im Wesentlichen parallel angeordnet sind.

11. Drehratensensor nach einem der vorherigen Ansprüche, wobei der Drehratensensor eine weitere Federanordnung, bevorzugt zwei Federanordnungen, weiter bevorzugt drei weitere Federanordnungen, aufweist, wobei die weitere Federanordnung, bevorzugt die weiteren Federanordnungen, im Wesentlichen identisch zu der Federanordnung ausgebildet ist.

## Claims

1. Yaw rate sensor with a substrate, the yaw rate sensor having a drive structure (2) which can be moved in relation to the substrate, the drive structure (2) being fastened to the substrate by means of a spring arrangement, the spring arrangement having a first spring component (20) which connects the drive structure (2) and the substrate and a second spring component (30) which connects the drive structure (2) and the substrate, the first spring component (20) and the second spring component (30) being connected with the aid of an intermediate piece (40), **characterized in that** the intermediate piece (40) has a first edge beam (41) and a second edge beam (42), a group (50) of connecting beams being arranged between the first and second edge beam (41, 42), the connecting beams (51, 52, 53, 54) of the group (50) of connecting beams being arranged in each case at an opening angle of between 1° and 89° on the first and/or second edge beam (41, 42).

2. Yaw rate sensor according to Claim 1, the connecting beams (51, 52, 53, 53) of the group (50) of connecting beams being arranged in each case at an opening angle of between 10° and 80°, preferably of between 30° and 60°, particularly preferably of between 40° and 50°, further particularly preferably of between 44° and 46°, on the first and/or second edge beam (41, 42).

3. Yaw rate sensor according to either of the preceding claims, the connecting beams (51, 52) of a first subgroup of the group (50) of connecting beams having a positive slope relative to a main extent axis (100) of the first edge beam (41), and the connecting beams (53, 54) of a second subgroup of the group (50) of connecting beams having a negative slope relative to the main extent axis (100) of the first edge beam (41), the first subgroup and the second subgroup having, in particular, a substantially identical number of connecting beams.

4. Yaw rate sensor according to Claim 3, one of the connecting beams (51, 52) of the first subgroup crossing in each case at least one of the connecting beams (53, 54) of the second subgroup.

5. Yaw rate sensor according to one of the preceding claims, clearances being configured between the connecting beams (51, 52, 53, 54), the clearances having a diamond-shaped area, in particular, in a manner which is projected onto a main extent plane (200) of the substrate.

6. Yaw rate sensor according to one of the preceding claims, the connecting beams (51, 52, 53, 54) of the group (50) of connecting beams connecting the first and second edge beam (41, 42) to one another mechanically.

7. Yaw rate sensor according to one of the preceding claims, the first and second edge beam (41, 42) being arranged substantially parallel to one another.

8. Yaw rate sensor according to one of the preceding claims, the connecting beams (51, 52, 53, 54) of the group (50) of connecting beams being configured substantially as struts between the first and second edge beam (41, 42).

9. Yaw rate sensor according to one of the preceding claims, the first spring component (20) having a first part region (21) and a second part region (22), the drive structure (2) being connected to the intermediate piece (40) with the aid of the first part region (21), and the intermediate piece (40) or a centre region (25) which is arranged at least partially between the first part region (21) and the second part region (22) of the first spring component (20) being connected to the substrate with the aid of the second part region (22), the second spring component (30) being of substantially mirror-symmetrical configuration with respect to the first spring component (20) .

10. Yaw rate sensor according to Claim 9, the first part region (21) and the second part region (22) being configured in each case substantially as beams, the first part region (21) and the second part region (22) being arranged substantially in parallel in the rest position of the yaw rate sensor.

11. Yaw rate sensor according to one of the preceding claims, the yaw rate sensor having a further spring arrangement, preferably two spring arrangements, further preferably three further spring arrangements, the further spring arrangement, preferably the further spring arrangements, being of substantially identical configuration to the spring arrangement.

## Revendications

1. Capteur de vitesse de rotation comprenant un substrat, le capteur de vitesse de rotation présentant une structure d'entraînement (2) mobile par rapport au substrat, la structure d'entraînement (2) étant fixée au substrat à l'aide d'un agencement de ressort, l'agencement de ressort présentant un premier composant de ressort (20) reliant la structure d'entraînement (2) et le substrat et un deuxième composant de ressort (30) reliant la structure d'entraînement (2) et le substrat, le premier composant de ressort (20) et le deuxième composant de ressort (30) étant reliés à l'aide d'une pièce intermédiaire (40),
**caractérisé en ce que** la pièce intermédiaire (40) présente une première poutre de bord (41) et une deuxième poutre de bord (42), un groupe (50) de poutres de liaison étant disposé entre la première et la deuxième poutre de bord (41, 42), les poutres de liaison (51, 52, 53, 54) du groupe (50) de poutres de liaison étant respectivement disposées sur la première et/ou la deuxième poutre de bord (41, 42) selon un angle d'ouverture compris entre 1° et 89°.

2. Capteur de vitesse de rotation selon la revendication 1, dans lequel les poutres de liaison (51, 52, 53, 53) du groupe (50) de poutres de liaison sont disposées sur la première et/ou la deuxième poutre de bord (41, 42) respectivement selon un angle d'ouverture compris entre 10° et 80°, de préférence entre 30° et 60°, de plus grande préférence entre 40° et 50°, de plus grande préférence encore entre 44° et 46°.

3. Capteur de vitesse de rotation selon l'une quelconque des revendications précédentes, dans lequel les poutres de liaison (51, 52) d'un premier sous-groupe du groupe (50) de poutres de liaison présentent une pente positive par rapport à un axe d'extension principal (100) de la première poutre de bord (41), et les poutres de liaison (53, 54) d'un deuxième sous-groupe du groupe (50) de poutres de liaison présentent une pente négative par rapport à l'axe d'extension principal (100) de la première poutre de bord (41), le premier sous-groupe et le deuxième sous-groupe présentant en particulier substantiellement le même nombre de poutres de liaison.

4. Capteur de vitesse de rotation selon la revendication 3, dans lequel l'une des poutres de liaison (51, 52) du premier sous-groupe croise respectivement au moins l'une des poutres de liaison (53, 54) du deuxième sous-groupe.

5. Capteur de vitesse de rotation selon l'une quelconque des revendications précédentes, dans lequel des espaces libres sont réalisés entre les poutres de liaison (51, 52, 53, 54), les espaces libres présentant une forme de base en forme de losange, notamment lorsqu'elle est projetée sur un plan d'extension principal (200) du substrat.

6. Capteur de vitesse de rotation selon l'une quelconque des revendications précédentes, dans lequel les poutres de liaison (51, 52, 53, 54) du groupe (50) de poutres de liaison relient mécaniquement la première et la deuxième poutre de bord (41, 42) l'une à l'autre.

7. Capteur de vitesse de rotation selon l'une quelconque des revendications précédentes, dans lequel la première et la deuxième poutre de bord (41, 42) sont disposées substantiellement en parallèle l'une à l'autre.

8. Capteur de vitesse de rotation selon l'une quelconque des revendications précédentes, dans lequel les poutres de liaison (51, 52, 53, 54) du groupe (50) de poutres de liaison sont réalisées substantiellement sous forme d'entretoises entre la première et la deuxième poutre de bord (41, 42).

9. Capteur de vitesse de rotation selon l'une quelconque des revendications précédentes, dans lequel le premier composant de ressort (20) présente une première zone partielle (21) et une deuxième zone partielle (22), la structure d'entraînement (2) étant reliée à la pièce intermédiaire (40) à l'aide de la première zone partielle (21), et la pièce intermédiaire (40) ou une zone centrale (25) disposée au moins partiellement entre la première zone partielle (21) et la deuxième zone partielle (22) du premier composant de ressort (20) étant reliée au substrat à l'aide de la deuxième zone partielle (22), le deuxième composant de ressort (30) étant réalisé substantiellement en symétrie spéculaire par rapport au premier composant de ressort (20).

10. Capteur de vitesse de rotation selon la revendication 9, dans lequel la première zone partielle (21) et la deuxième zone partielle (22) sont respectivement réalisées substantiellement sous forme de poutres, la première zone partielle (21) et la deuxième zone partielle (22) étant disposées substantiellement en parallèle dans la position de repos du capteur de vitesse de rotation.

11. Capteur de vitesse de rotation selon l'une quelconque des revendications précédentes, dans lequel le capteur de vitesse de rotation présente un autre agencement de ressort, de préférence deux agencements de ressort, de plus grande préférence trois autres agencements de ressort, dans lequel l'autre agencement de ressort, de préférence les autres agencements de ressort, sont réalisés de manière substantiellement identique à l'agencement de ressort.
